# EUROPEAN PATENT SPECIFICATION

(11) **EP 1 333 189 B1**
(45) Date of publication and mention of the grant of the patent: **31.08.2005**
(21) Application number: 03075351.1
(22) Date of filing: 05.02.2003
(51) Int. Cl.: F16D 65/28, B60G 3/12, B60T 1/06

(54) **Vehicle comprising brake means as well as independent wheel suspension construction**
Fahrzeug mit Bremse sowie Einzelradaufhängung
Véhicule avec moyens de freinage et suspension de roue indépendante

(30) Priority: 05.02.2002 NL 1019900
(43) Date of publication of application: 06.08.2003
(73) Proprietor: Transport Industry Development Centre B.V., 5692 GA Son en Breugel (NL)
(72) Inventor: van Genugten, Antonius Jacobus, 5298 VK Liempde (NL)
(74) Representative: Valkonet, Rutger

(56) References cited:
- GB-A- 575 645
- US-A- 2 516 160
- US-B1- 6 260 645

## Description

The invention relates to a vehicle on wheels, which vehicle comprises brake means for braking at least one of the wheels, which at least one wheel is rotatable about a wheel axle, which brake means comprise a friction element which can be pressed against the wheel or against a part rotating along with said wheel, an actuator positioned on the radially outer side of said at least one wheel, which comprises an actuator element capable of reciprocating motion for moving a transmission element fitted with a pivot pin extending between the ends thereof, which transmission element is connected to the actuator element on the one hand and to the friction element on the other hand for actuating the friction element, the transmission element comprises a lever mechanism comprising a first arm member and a second arm member, which extend from the pivot pin towards, respectively, the actuator element and the friction element.

According to the general state of the art as known to those skilled in this field a vehicle, such as a truck or a trailer, in order to be able to brake, is fitted with a brake arrangement comprising a pneumatically operating cylinder which, upon being energized, causes a cylinder rod to move in its longitudinal direction. Said movement is transmitted to a pivotable brake arm via a transmission rod, which brake arm is in turn connected to a friction element, as in a drum brake or disc brake system, which friction element is pressed against the wheel or against a part rotating along with said wheel upon suitable pivoting of the brake arm. The friction force thus generated causes the wheel to be braked and the vehicle to come to a standstill, if desired.

With such a configuration, the cylinder rod and the transmission rod are in line or jointly form an integral (cylinder) rod, so that the movement of the cylinder rod is rectilinearly transmitted to the brake arm that is connected to the friction element. During braking action of the brake arrangement, the cylinder rod and the separate transmission rod that may be provided are subjected to pressure. This manner of transmission is disadvantageous in certain respects as regards the physical characteristics of the brake arrangement as a whole, which has to comply with the strictest requirements. The cylinder rod and the transmission rod must not vibrate under the influence of the force from the actuator, and the frictional resistance thereof must be kept as low as possible so as to enhance the efficiency of the brake arrangement. This means that lateral forces on the transmission element must be avoided.

The rectilinear transmission as described above is realised by having the direction of operation of the actuator extend towards the point of engagement of the transmission rod on the brake arm. In practice, the brake cylinder is usually disposed beside the wheel, seen in top plan view, diagonally above the central axis of the wheel, usually near the wheel suspension.

One drawback of such a construction of a brake arrangement is the fact that there is little constructional freedom in positioning the various elements of the brake arrangement and in particular the brake cylinder, as a result of which the available space within the wheel housing of the vehicle cannot be optimally utilized. This problem plays a role in particular in the construction of modern trucks. Given the legally prescribed maximum height of a vehicle, the height of the chassis of the vehicle above the road surface, the dimensions of the wheel in combination with the user requirements as regards the dimensions of the cargo hold, the trend is to make the available space within the wheel housing smaller and smaller. In practice this has so far implied that space must be made available for the brake cylinder at a location within the wheel housing where this is hardly possible, if at all, whereas ample space is available at other locations within the wheel housing, which space cannot be utilised.

A vehicle as referred to in the introduction is known from US patent No 2,516,160, in which the piston rod of a pneumatic cylinder for actuation of a drum brake system is oriented parallel to a wheel axle. The movement of the piston rod is transmitted to the brake system by means of a relatively complex kinematic system. Due to the complexity of the disclosed configuration, the cost price thereof is high, whilst in addition the piston rod takes up space beside the wheels, seen in axial direction. In particular in the case of trailers said space might also be suitably utilized as cargo space.

The object of the invention described herein is to provide a brake arrangement for a vehicle, which is constructed in such a manner that the available space within the wheel housing can be optimally utilised. In addition to the above object it is an object of the invention to provide a brake arrangement which not only equals the prior art as regards the physical characteristics, but even surpasses it. Taking into account the drawbacks of the prior art, the invention provides a vehicle as referred to in the introduction, which is characterized in that the actuator is positioned on the radially outer side of said at least one wheel and in that the first arm member extends at least partially within the width of said at least one wheel and the second arm member extends at least partially outside the width of said at least one wheel. This creates a great many possibilities as regards the location and the direction of operation of the actuator, and thus as regards the utilisation of space within the wheel housing, as will be explained in more detail hereinafter. Furthermore it has become apparent that, as a result of the use of such a transmission element, the movement of the actuator element of the actuator can be converted into a pulling force for activating the friction element at all times. This leads to an improvement of the physical characteristics of the system in comparison with the situation in which the friction element is actuated by means of a pushing force. The arrangement is thus made more stable. The use of two arm members provides flexibility in a constructionally very simple manner, since the positioning and the orientation of the actuator is thus not determined, or at least is no longer limited to the extent as was the case in the prior art, by the position of the friction element and, possibly, the brake arm. In addition, the direction of operation of the actuator is no longer determined in advance, either.

An embodiment which is constructionally advantageous, because of its simplicity, is obtained if the first arm member is connected to the pivot pin at a position located within the width of said at least one wheel and the second arm member is connected to the pivot pin at a position located outside the width of said at least one wheel. This makes it possible to use arm members having a relatively simple geometry as much as possible, whilst in addition the mechanical load to which said arm members are subjected is minimised.

A very practical embodiment, which can be used very well with the current brake systems, is obtained if the brake means comprise a brake arm which pivots about a brake pivot, which brake arm is connected to the transmission element at a point spaced from said brake pivot.

As far as the pivot pin is concerned, it is preferable for the pivot pin to extend outside the diameter of said at least one wheel and/or parallel to the wheel axle. Especially in the case of such a preferred embodiment it is possible to optimally utilise the unused (so far) space in the wheel housings for the brake system, more specifically for the actuator thereof. In addition, especially the fact that the pivot pin extends parallel to the wheel of shaft makes it possible to minimise or eliminate any transverse forces that may occur upon actuation of the brake means.

The same advantages apply if, according to another preferred embodiment, the actuator element extends within the width of said at least one wheel during movement thereof, which movement is even more preferably oriented perpendicularly to the wheel axle.

The amount of space that is taken up in a disadvantageous manner by the actuator is minimised or eliminated altogether if the actuator extends within the width of said at least one wheel.

In order to enhance the degree of reliability, on account of a high inherent constructional strength, the pivot pin is preferably supported in bearings on two sides. The two arm members preferably engage the pivot pin at positions between the two bearings in that case.

A constructionally simple embodiment in which this is realised is obtained if the pivot pin is bearing-mounted in the two legs of a substantially U-shaped bracket.

Said bracket can furthermore be employed in a useful manner by connecting the actuator to the bracket.

The invention furthermore relates to an independent wheel suspension construction for use in a vehicle according to any one of the preceding claims, comprising a frame for mounting the independent wheel suspension construction on the chassis of the vehicle, a supporting arm connected to the frame, which supports a wheel which rotates about a wheel axle, brake means for braking said wheel, which brake means are provided with a friction element which can be pressed against the wheel or against a part rotating along with said wheel, an actuator connected to said supporting arm, which is positioned on the radially outer side of said at least one wheel, which actuator comprises an actuator element capable of reciprocating motion for moving a transmission element fitted with a pivot pin extending between its ends, which transmission element is connected to the actuator element on the one hand and to the friction element on the other hand for actuating the friction element, in which the transmission element comprises a lever mechanism comprising a first arm member and a second arm member, which extend from said pivot pin towards, respectively, the actuator element and the friction element, with the first arm member extending at least partially within the width of said at least one wheel and the second arm member extending at least partially outside the width of said at least one wheel. The advantages of such a wheel suspension construction have already been discussed above within the framework of the explanation of the vehicle according to the invention. Said advantages are in particular manifest when using an independent wheel suspension, since this enables an optimum use of the space between adjacent wheels having aligned wheel axles, because of the absence of a continuous axle for both wheels.

In order to enable the vehicle fitted with the wheel suspension construction according to the invention to spring and absorb shocks in an advantageous manner, the supporting arm is preferably pin-pivoted to the frame.

In order to have the transmission element move jointly with the associated wheel and the brake means with respect to the frame during springing and shock absorbing action, so that no undesirable braking action will take place or, on the contrary, be lost during movement of the frame and the supporting arm with respect to each other, it is advantageous if the pivot pin is rotatably journalled with respect to the supporting arm, or at least with respect to a part connected thereto.

Further preferred embodiments of a wheel suspension construction according to the invention have already been discussed and explained above in the description of preferred embodiments of the vehicle according to the invention.

The invention will be explained in more detail hereinafter by means of a description of a preferred embodiment thereof, in which reference is made to the following figures:
Figure 1 is a perspective view of a wheel fitted with a brake arrangement according to the invention;
Figure 2 is a side elevation of a wheel as shown in Figure 1;
Figure 3 is a top plan view of the wheel of Figure 1; and
Figure 4 is a rear view of the wheel of figure 1.

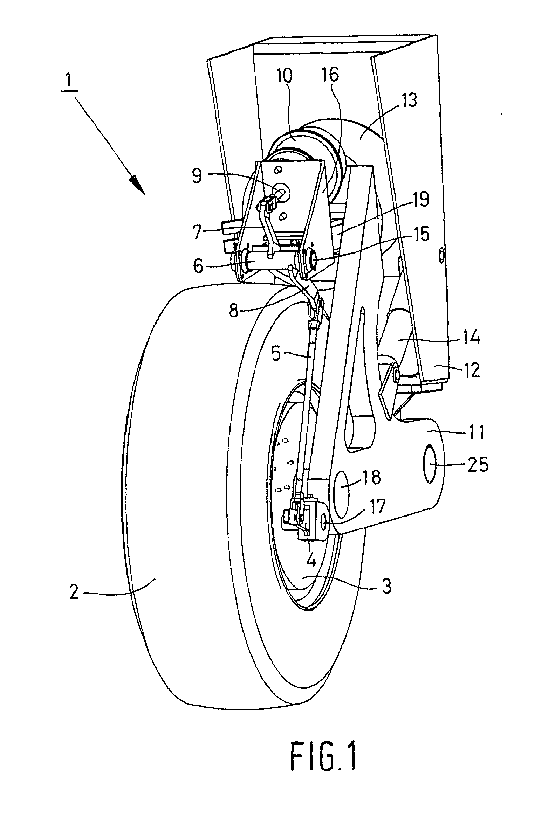

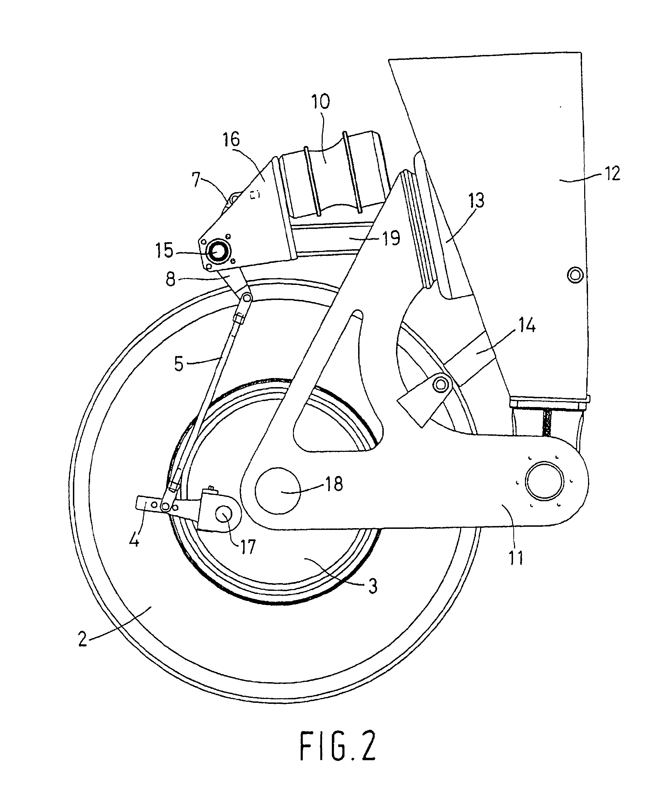

Figures 1-4 are various views of the assembly 1 of a wheel 2 with the wheel suspension and the brake arrangement according to the invention. The assembly 1, which is an independent wheel suspension construction, is intended for being mounted on the chassis of a trailer. The wheel 2 and the associated wheel axle 18 are mounted on a supporting arm 11, which is pivotally connected to a frame 12 about a suspension axle 25. The independent wheel suspension construction 1 is mounted on the trailer chassis (not shown) via the frame 12. The supporting arm 11 is furthermore supported on the frame 12 via a shock absorber 13 and a shock absorber 14.

The brake arrangement being used consists of a brake drum 3, which can be actuated by means of a brake arm 4, which pivots about a pin 17 which is fixedly disposed with respect to the wheel 2. The brake arm 4 is connected to the cylinder rod 9 of the pneumatic cylinder 10 by means of a rod 5 and a lever mechanism 6 comprising arm members 7 and 8. The lever mechanism 6 can pivot as a result of pivoting movement of the pivot pin 15, which forms part of the lever mechanism 6 and which is bearing-mounted in the two legs of the U-shaped mounting bracket 16. The pivot pin 15 extends parallel to the wheel axle 18 outside the diameter of the wheel 2.

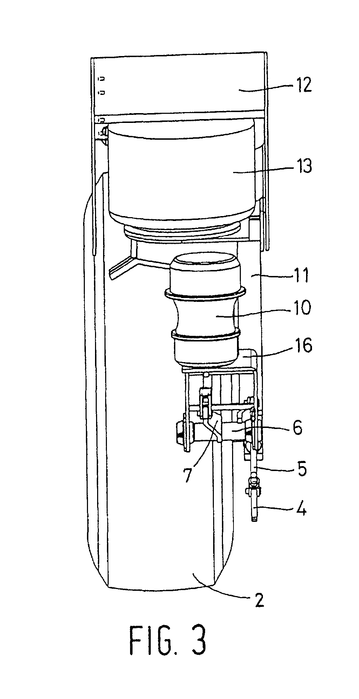

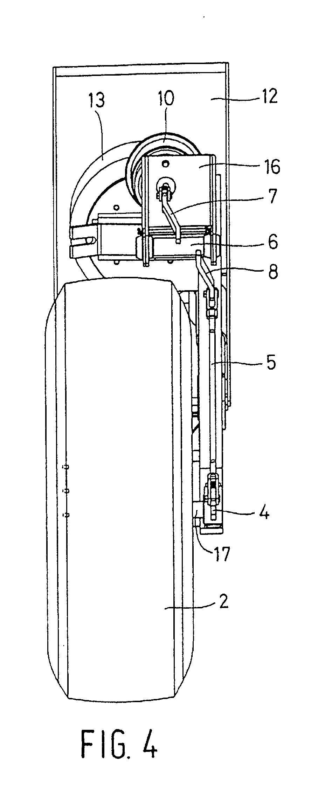

The mounting bracket 16 is connected to the supporting arm 11 by means of a solid mounting strip 19, so that any shocks of the wheel 2 caused by road bumps will not affect the operation of the brake arrangement. As is clearly shown in particular in figures 3 and 4, the arm member 7 extends within the width of the wheel 2 whilst being connected to the pivot pin 15 at a position located within said width as well, whereas the arm member 8 extends outside the width of the wheel 2 whilst being connected to the pivot pin 15 at a position located outside said width as well. The arm members 7 and 8 extend substantially parallel to each other, viz. perpendicularly to the wheel axle 18.

When the pneumatic cylinder 10 is suitably actuated, in a manner which is known per se, the cylinder rod 9 is pushed in forward direction by the cylinder 10, which movement is converted into a pulling movement on the rod 5, via the arm member 7 and the arm member 8 of the lever mechanism 6. During said movement, which takes place in a direction perpendicularly to the wheel axle 18, the arm member 7 remains within the width of the wheel 2. The movement of the cylinder rod 9 causes the brake arm 4 to pivot in clockwise direction about the pivot pin 17, as a result of which the brake drum 3 is energized in a manner which is known per se.

The figures clearly show that the position of the cylinder 10 with respect to the wheel 2 is determined in large measure by the configuration of the lever mechanism. Since the arm member 7 and the arm member 8 engage the pivot pin 15 at different longitudinal positions, it is possible to position the cylinder 10 entirely within the width of the wheel 2, in spite of the fact that the rod 5 extends along the wheel 2.

The length of the arm members 7 and 8 introduces yet another degree of freedom. This makes it possible inter alia to adapt the spacing between the cylinder 10 and the wheel 2. If the angle which the arm members 7 and 8 include with each other in the plane perpendicularly to the pivot pin 15 is furthermore varied, the position and the direction of operation of the actuator 10 can be fully adapted to the requirements of the person skilled in the art. Moreover, all these adaptations can be effected without the physical characteristics of the brake arrangement being adversely affected.

As appears from the above description of the figures, the use of a lever mechanism in the transmission element of the brake arrangement offers major advantages as regards design and characteristics. The embodiments that are shown in the figures merely function to illustrate the vehicle as described in the invention. The scope of the invention disclosed herein is exclusively limited by the following claims, however.

## Claims

1. A vehicle on wheels, which vehicle comprises brake means for braking at least one of the wheels (2), which at least one wheel (2) is rotatable about a wheel axle (18), which brake means comprise a friction element which can be pressed against the wheel (2) or against a part rotating along with said wheel (2), an actuator (10) on which comprises an actuator element (9) capable of reciprocating motion for moving a transmission element fitted with a pivot pin (15) extending between the ends thereof, which transmission element is connected to the actuator element (9) on the one hand and to the friction element on the other hand for actuating the friction element, wherein the transmission element comprises a lever mechanism comprising a first arm member (7) and a second arm member (8), which extend from the pivot pin (15) towards, respectively, the actuator element (9) and the friction element, **characterised in that** the actuator (10) is positioned on the radially outer side of said at least one wheel (2) and **in that** the first arm member (7) extends at least partially within the width of said at least one wheel (2) and the second arm member (8) extends at least partially outside the width of said at least one wheel (2).

2. A vehicle according to claim 1, **characterized in that** the first arm member (7) is connected to the pivot pin (15) at a position located within the width of said at least one wheel (2) and the second arm member (8) is connected to the pivot pin (15) at a position located outside the width of said at least one wheel (2).

3. A vehicle according to claim 1 or 2, **characterized in that** the brake means comprises a brake arm (4) which pivots about a brake pivot (17), which brake arm (4) is connected to the transmission element at a point spaced from said brake pivot (17).

4. A vehicle according to claim 1, 2 or 3, **characterized in that** the pivot pin (15) extends outside the diameter of said at least one wheel (2).

5. A vehicle according to claim 1, 2, 3 or 4, **characterized in that** the pivot pin (15) extends parallel to the wheel axle (18).

6. A vehicle according to any one of the preceding claims, **characterized in that** the actuator element (9) extends within the width of said at least one wheel (2) during movement thereof.

7. A vehicle according to claim 6, **characterized in that** said movement is oriented perpendicularly to the wheel axle (18).

8. A vehicle according to any one of the preceding claims, **characterized in that** the actuator extends within the width of said at least one wheel (2).

9. A vehicle according to any one of the preceding claims, **characterized in that** the pivot pin (15) is supported in bearings on two sides.

10. A vehicle according to claim 9, **characterized in that** the pivot pin (15) is bearing-mounted in the two legs of a substantially U-shaped bracket (16).

11. A vehicle according to claim 10, **characterized in that** the actuator is connected to said bracket (16).

12. A vehicle according to any one of the preceding claims, **characterized in that** the vehicle is fitted with an independent wheel suspension construction (1) for said at least one wheel (2).

13. An independent wheel suspension construction (1) for use in a vehicle according to any one of the preceding claims, comprising a frame (12) for mounting the independent wheel suspension construction (1) on the chassis of the vehicle, a supporting arm (11) connected to the frame (12), which supports a wheel (2) which rotates about a wheel axle (18), brake means for braking said wheel (2), which brake means are provided with a friction element which can be pressed against the wheel (2) or against a part rotating along with said wheel (2), an actuator connected to said supporting arm (11), which is positioned on the radially outer side of said at least one wheel (2), which actuator comprises an actuator element (9) capable of reciprocating motion for moving a transmission element fitted with a pivot pin (15) extending between its ends, which transmission element is connected to the actuator element (9) on the one hand and to the friction element on the other hand for actuating the friction element, in which the transmission element comprises a lever mechanism comprising a first arm member (7) and a second arm member (8), which extend from said pivot pin (15) towards, respectively, the actuator element (9) and the friction element, with the first arm member (7) extending at least partially within the width of said at least one wheel (2) and the second arm member (8) extending at least partially outside the width of said at least one wheel (2).

14. A wheel suspension construction (1) according to claim 13, **characterized in that** the supporting arm (11) is pin-pivoted to the frame (12).

15. A wheel suspension construction (1) according to claim 13 or 14, **characterized in that** the pivot pin (15) is rotatably journalled with respect to the supporting arm (11), or at least with respect to a part connected thereto.

16. A wheel suspension construction (1) according to claim 13, 14 or 15, **characterized by** any one or a number of characterizing features defined in claims 2 - 12.

## Patentansprüche

1. Fahrzeug auf Rädern, wobei das Fahrzeug Bremsmittel zum Bremsen von mindestens einem der Räder (2) umfasst, wobei das mindestens eine Rad (2) um eine Radachse (18) drehbar ist, wobei die Bremsmittel Folgendes umfassen: ein Reibungselement, das gegen das Rad (2) oder gegen einen Teil, der sich mit dem Rad (2) dreht, gedrückt werden kann, ein Betätigungsglied (10), das ein Betätigungselement (9) umfasst, das sich hin- und herbewegen kann, um ein Übertragungselement zu bewegen, das mit einem Drehzapfen (15) befestigt ist, der sich zwischen den Enden davon erstreckt, wobei das Übertragungselement mit dem Betätigungselement (9) einerseits und mit dem Reibungselement andererseits verbunden ist, um das Reihungselement zu betätigen, wobei das Übertragungselement einen Hebelmechanismus umfasat, der ein erstes Armelement (7) und ein zweites Armelement (8) umfasst, die sich jeweils vom Drehzapfen (15) zum Betätigungselement (9) und zum Reibungselement erstrecken, **dadurch gekennzeichnet, dass** sich das Betätigungsglied (10) auf der radialen Außenfläche des mindestens einen Rades (2) befindet, und dass sich das erste Armelement (7) mindestens teilweise innerhalb der Breite des mindestens einen Rades (2) und sich das zweite Armelement (B) mindestens teilweise außerhalb der Breite des mindestens einen Rades (2) erstreckt.

2. Fahrzeug nach Anspruch 1, **dadurch gekennzeichnet, dass** das erste Armelement (7) mit dem Drehzapfen (15) in einer Position verbunden ist, die innerhalb der Breite des mindestens einen Rades (2) liegt, und dass das zweite Armelement (8) mit dem Drehzapfen (15) in einer Position verbunden ist, die außerhalb der Breite des mindestens einen Rades (2) liegt.

3. Fahrzeug nach Anspruch 1 oder 2, **dadurch gekennzeichnet, dass** das Bremsmittel einen Bremsarm (4) umfasst, der sich um einen Bremszapfen (17) dreht, wobei der Bremsarm (4) an einem vom Bremszapfen entfernten Punkt mit dem Übertragungselement verbunden ist.

4. Fahrzeug nach Anspruch 1, 2 oder 3, **dadurch gekennzeichnet, dass** sich der Drehzapfen (15) außerhalb das Durchmessers des mindestens einen Rades (2) erstreckt.

5. Fahrzeug nach Anspruch 1, 2, 3 oder 4, **dadurch gekennzeichnet, dass** sich der Drehzapfen (15) parallel zur Radachse (18) erstreckt.

6. Fahrzeug nach einem der vorhergehenden Ansprüche, **dadurch gekennzeichnet, dass** sich das Betätigungselement (9) innerhalb der Breite des mindestens einen Rades (2) während dessen Bewegung erstreckt.

7. Fahrzeug nach Anspruch 6, **dadurch gekennzeichnet, dass** die Bewegung senkrecht zur Radachse (18) orientiert ist.

8. Fahrzeug nach einem der vorhergehenden Ansprüche, **dadurch gekennzeichnet, dass** sich das Betätigungsglied innerhalb der Breite des mindestens einen Rades (2) erstreckt.

9. Fahrzeug nach einem der vorhergehenden Ansprüche, **dadurch gekennzeichnet, dass** der Drehzapfen (15) an zwei Seiten in Lagern gelagert wird.

10. Fahrzeug nach Anspruch 9, **dadurch gekennzeichnet, dass** der Drehzapfen (15) in den beiden Schenkeln eines im Wesentlichen u-förmigen Trägers (16) gelagert ist.

11. Fahrzeug nach Anspruch 10, **dadurch gekennzeichnet, dass** das Betätigungsglied mit dem Träger (16) verbunden ist.

12. Fahrzeug nach einem der vorhergehenden Ansprüche, **dadurch gekennzeichnet, dass** das Fahrzeug mit einer Einzelradaufhängungskonstruktion (1) für das mindestens eine Rad (2) befestigt ist.

13. Einzelradaufhängungskonstruktion (1) für den Einsatz in einem Fahrzeug nach einem der vorhergehenden Ansprüche, die Folgendes umfasst: einen Rahmen (12) zum Montieren der Einzelradaufhängungskonstruktion (1) auf dem Fahrgestell des Fahrzeugs, ein Tragarm (11), der mit dem Rahmen (12) verbunden ist, der ein Rad (2) trägt, das sich um eine Radachse (18) dreht, Bremsmittel zum Bremsen des Rads (2), wobei die Bremsmittel mit einem Reibungselement bereit gestellt sind, das gegen das Rad (2) oder gegen ein Teil, das sich mit dem Rad (2) dreht, gedrückt werden können, ein Betätigungsglied, das mit dem Tragarm (11) verbunden ist, der sich auf der radialen Außenseite des mindestens einen Rades (2) befindet, wobei das Betätigungsglied ein Betätigungselement (9) umfasst, das sich hin- und herbewegen kann, um ein Übertragungselement zu bewegen, das mit einem Drehzapfen (15) befestigt ist, der sich zwischen seinen Enden erstreckt, wobei das Übertragungselement mit dem Betätigungselement (9) einerseits und mit dem Reibungselement andererseits verbunden ist, um das Reibungselement zu betätigen, wobei das Übertragungselement einen Hebelmechanismus umfasst, der ein erstes Armelement (7) und ein zweites Armelement (8) umfasst, die sich jeweils vom Drehzapfen (15) zum Betätigungselement (9) und zum Reibungselement erstrecken, wobei sich das erste Armelement (7) mindestens teilweise innerhalb der Breite des mindestens einen Rades (2) und sich das zweite Armelement (8) mindestens teilweise außerhalb der Breite des mindestens einen Rades (2) erstreckt.

14. Radaufhängungskonstruktion (1) nach Anspruch 13, **dadurch gekennzeichnet, dass** der Tragarm (11) zapfendrehbar zum Rahmen (12) ist.

15. Radaufhängungskonstruktion (1) nach Anspruch 13 oder 14, **dadurch gekennzeichnet, dass** der Drehzapfen (15) gegenüber dem Tragarm (11) drehbar zapfengelagert ist, oder mindestens gegenüber einem damit verbundenen Teil.

16. Radaufhängungskonstruktion (1) nach Anspruch 13, 14 oder 15, die durch jedes oder alle kennzeichnenden Merkmale, die in den Ansprüchen 2 bis 12 definiert werden, **gekennzeichnet ist**.

## Revendications

1. Véhicule sur roues, lequel véhicule comprend des moyens de freinage pour freiner au moins l'une des roues (2), laquelle au moins l'une des roues (2) peut tourner autour d'un axe de roue (18), lesquels moyens de freinage comprennent un élément de friction qui peut être pressé contre la roue (2) ou contre une partie tournant avec ladite roue (2), un actionneur (10) qui comprend un élément d'actionnement (9) pouvant effectuer un mouvement alternatif pour déplacer un élément de transmission monté avec un axe de pivot (15) s'étendant entre les extrémités de celui-ci, lequel élément de transmission est connecté à l'élément d'actionnement (9) d'une part et à l'élément de friction d'autre part pour actionner l'élément de friction, dans lequel l'élément de transmission comprend un mécanisme de levier comprenant un premier élément de bras (7) et un second élément de bras (8), qui s'étendent depuis l'axe de pivot (15) vers, respectivement, l'élément d'actionnement (9) et l'élément de friction, **caractérisé en ce que** l'actionneur (10) est positionné sur le côté radialement extérieur de ladite au moins une roue (2) et **en ce que** le premier élément de bras (7) s'étend au moins en partie dans la largeur de ladite au moins une roue (2) et le second élément de bras (8) s'étend au moins en partie à l'extérieur de la largeur de ladite au moins une roue (2).

2. Véhicule selon la revendication 1, **caractérisé en ce que** le premier élément de bras (7) est connecté à l'axe de pivot (15) en une position située à l'intérieur de la largeur de ladite au moins une roue (2) et le second élément de bras (8) est connecté à l'axe de pivot (15) en une position située à l'extérieur de la largeur de ladite au moins une roue (2).

3. Véhicule selon la revendication 1 ou 2, **caractérisé en ce que** les moyens de freinage comprennent un bras de freinage (4) qui pivote autour d'un pivot de frein (17), lequel bras de freinage (4) est connecté à l'élément de transmission en un point espacé dudit pivot de frein (17).

4. Véhicule selon la revendication 1, 2 ou 3, **caractérisé en ce que** l'axe de pivot (15) s'étend à l'extérieur du diamètre de ladite au moins une roue (2).

5. Véhicule selon la revendication 1, 2, 3 ou 4, **caractérisé en ce que** l'axe de pivot (15) s'étend parallèlement à l'axe de roue (18).

6. Véhicule selon l'une quelconque des revendications précédentes, **caractérisé en ce que** l'élément d'actionnement (9) s'étend dans la largeur de ladite au moins une roue (2) pendant le mouvement de celle-ci.

7. Véhicule selon la revendication 6, **caractérisé en ce que** ledit mouvement est orienté perpendiculairement à l'axe de roue (18).

8. Véhicule selon l'une quelconque des revendications précédentes, **caractérisé en ce que** l'actionneur s'étend dans la largeur de ladite au moins une roue (2).

9. Véhicule selon l'une quelconque des revendications précédentes, **caractérisé en ce que** l'axe de pivot (15) est supporté dans des paliers sur les deux côtés.

10. Véhicule selon la revendication 9, **caractérisé en ce que** l'axe de pivot (15) est monté sur paliers dans les deux pattes d'un support sensiblement en forme de U (16).

11. Véhicule selon la revendication 10, **caractérisé en ce que** l'actionneur est connecté au dit support (16).

12. Véhicule selon l'une quelconque des revendications précédentes, **caractérisé en ce que** le véhicule est équipé d'une construction de suspension de roue indépendante (1) pour ladite au moins une roue (2).

13. Construction de suspension de roue indépendante (1) destinée à être utilisée dans un véhicule selon l'une quelconque des revendications précédentes, comprenant un cadre (12) pour monter la construction de suspension de roue indépendante (1) sur le châssis du véhicule, un bras de support (11) connecté au cadre (12), qui supporte une roue (2) qui tourne autour d'un axe de roue (18), des moyens de freinage pour freiner ladite roue (2), lesquels moyens de freinage sont munis d'un élément de friction qui peut être pressé contre la roue (2) ou contre une partie tournant avec ladite roue (2), un actionneur connecté au dit bras de support (11), qui est positionné sur le côté radialement extérieur de ladite au moins une roue (2), lequel actionneur comprend un élément d'actionnement (9) pouvant effectuer un mouvement alternatif pour déplacer un élément de transmission équipé d'un axe de pivot (15) s'étendant entre ses extrémités, lequel élément de transmission est connecté à l'élément d'actionnement (9) d'une part et à l'élément de friction d'autre part pour actionner l'élément de fiction, dans lequel l'élément de transmission comprend un mécanisme de levier comprenant un premier élément de bras (7) et un second élément de bras (8), qui s'étend depuis l'axe de pivot (15) vers, respectivement, l'élément d'actionnement (9) et l'élément de friction, avec le premier élément de bras (7) s'étendant au moins en partie dans la largeur de ladite au moins une roue (2) et le second élément de bras (8) s'étendant au moins en partie à l'extérieur de la largeur de ladite au moins une roue (2).

14. Construction de suspension de roue (1) selon la revendication 13, **caractérisée en ce que** le bras de support (11) est monté à pivotement sur un axe sur le cadre (12).

15. Construction de suspension de roue (1) selon la revendication 13 ou 14, **caractérisée en ce que** l'axe de pivot (15) est monté à rotation par rapport au bras de support (11), ou au moins par rapport à une partie qui y est connectée.

16. Construction de suspension de roue (1) selon la revendication 13, 14 ou 15, **caractérisée par** l'une quelconque ou un certain nombre des caractéristiques définies dans les revendications 2 à 12.
